# EUROPÄISCHE PATENTSCHRIFT

(11) **EP 2 780 664 B1**
(45) Veröffentlichungstag und Bekanntmachung des Hinweises auf die Patenterteilung: **27.09.2017**
(21) Anmeldenummer: 12805923.5
(22) Anmeldetag: 15.11.2012
(51) Int. Cl.: G01B 11/16, G01L 1/24, G02B 6/02

(54) **FBG-DEHNUNGSSENSOR FÜR GEKRÜMMTE OBERFLÄCHEN**
FBG STRAIN SENSOR FOR CURVED SURFACES
CAPTEUR EXTENSOMÉTRIQUE À RÉSEAU DE BRAGG SUR FIBRE POUR SURFACES COURBES

(30) Priorität: 15.11.2011 DE 102011118527; 15.11.2011 DE 102011118526; 15.11.2011 DE 102011118525
(43) Veröffentlichungstag der Anmeldung: 24.09.2014
(73) Patentinhaber: Hottinger Baldwin Messtechnik GmbH, 64293 Darmstadt (DE)
(72) Erfinder: MAUL, Jochen, 55118 Mainz (DE); KIPP, Tobias, 63322 Rödermark (DE); GÜNTHER, Bernd, 76185 Karlsruhe (DE)
(74) Vertreter: Staudte, Ralph
(86) Internationale Anmeldenummer: PCT/DE2012/001095
(87) Internationale Veröffentlichungsnummer: WO 2013/071914

(56) Entgegenhaltungen:
- WO-A1-2005/114099
- JP-A- 2003 279 760
- US-A1- 2002 009 252

## Beschreibung

Die vorliegende Erfindung betrifft einen Dehnungssensor mit einer optischen Faser, die ein Faser-Bragg-Gitter aufweist, nachfolgend FBG-Dehnungssensor genannt. Die Erfindung ist geeignet, eine Dehnung auch an gekrümmten Oberflächen präzise zu messen.

Dehnungsempfindliche Sensoren, die auf der zu untersuchenden Materialoberfläche befestigt werden, sind als sogenannte Metallfolien-DMS oder als FBG-Fasersensoren bekannt. Ein Metallfolien-DMS besteht im Wesentlichen aus einer Kunststoff-Trägerfolie, auf der wenigstens ein dünner mäanderförmiger Metallfolienstreifen vollflächig, d. h. mit seiner gesamten Fläche, befestigt ist. Zur Erfassung der Dehnung wird die Kunststoff-Trägerfolie auf die zu untersuchende Materialfläche aufgeklebt. Die Nutzung einer Kunststofffolie als Sensorträger ist erforderlich, da nur mit einer solchen Anordnung DMS definiert applizierbar sind. Das elektrisch isolierte Applizieren der sehr dünnen Metallfolie ohne die relativ stabile Kunststofffolie ist außerhalb von Laborbedingungen nicht praktikabel.

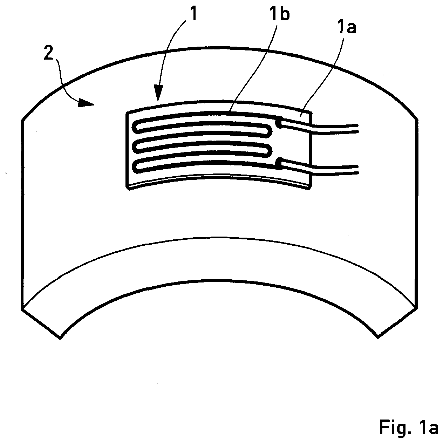

Analog zu diesen Metallfolien-DMS wurden FBG-Sensoren entwickelt, die als wesentliches Bauelement eine Glasfaser mit einem Faser-Bragg-Gitter aufweisen, nachfolgend als FBG bezeichnet. Diese Glasfaser muss ebenfalls auf der zu untersuchenden Materialoberfläche befestigt werden. Hierbei treten ebenfalls Probleme bei der Handhabung auf, denn die Glasfaser ist dünn und bruchempfindlich. Daher musste ebenfalls ein Sensorträger entwickelt werden, damit der FBG-Sensor unempfindlicher gegenüber rauen Praxisbedingungen wird. In den Dokumenten JP 2003 279760 A und WO 2008/101657 A1 sind derartige Sensoren beschrieben. Durch die Einbettung der empfindlichen Faser mit dem FBG in eine weiche Kunststoffmasse ist der Sensor handhabbar und somit praxistauglich geworden. Der in dem Dokument WO 2008/101657 A1 beschriebene FBG-Sensor hat eine Zweipunkt-Krafteinleitung und dadurch eine wesentlich größere Messgenauigkeit als FBG-Sensoren, die vollflächig appliziert werden. Mit diesem Sensortyp sind Dehnungen an ebenen Oberflächen präzise messbar. Im Gegensatz zu den Metallfolien-DMS treten jedoch bei der Messung mit FBG-Sensoren an gekrümmten Oberflächen Probleme auf, die an Hand der Fig. 1a bis 1g erläutert werden.

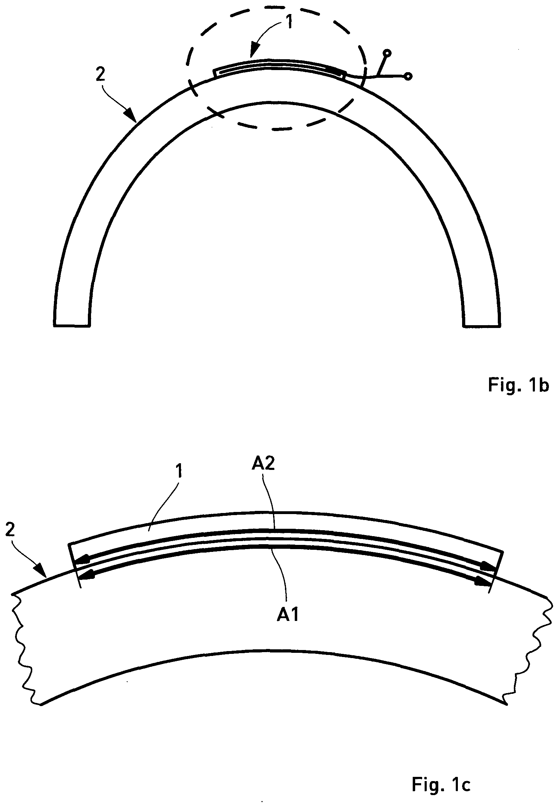

Die Fig. 1a - 1c zeigen einen herkömmlichen Metallfolien-DMS, der auf einer gekrümmten Materialoberfläche aufgeklebt ist, wobei die Fig. 1a eine perspektivische Darstellung der gekrümmten Materialoberfläche mit einer DMS-Applikation zeigt. Die Fig. 1b zeigt die Seitenansicht von Fig. 1a, und die Fig. 1c zeigt einen vergrößerten Ausschnitt der Fig. 1b.

Wenn das Material durch Krafteinwirkung gedehnt wird oder sich durch Temperatureinwirkung ausdehnt, wie in Fig. 1c durch den Doppelpfeil A1 angedeutet, wird auf Grund der Befestigung der Trägerfolie über die gesamte Fläche durch Kleben auf dem Material die Dehnung gleichmäßig auf die über die gesamte Fläche mit der Trägerfolie verbundenen Metallfolie übertragen und somit auch die Metallfolie in diesem Maß gedehnt. Insofern wird die Materialdehnung nahezu fehlerfrei auf den Metallfolien-DMS übertragen, wie in Fig. 1c durch den Doppelpfeil A2 angedeutet.

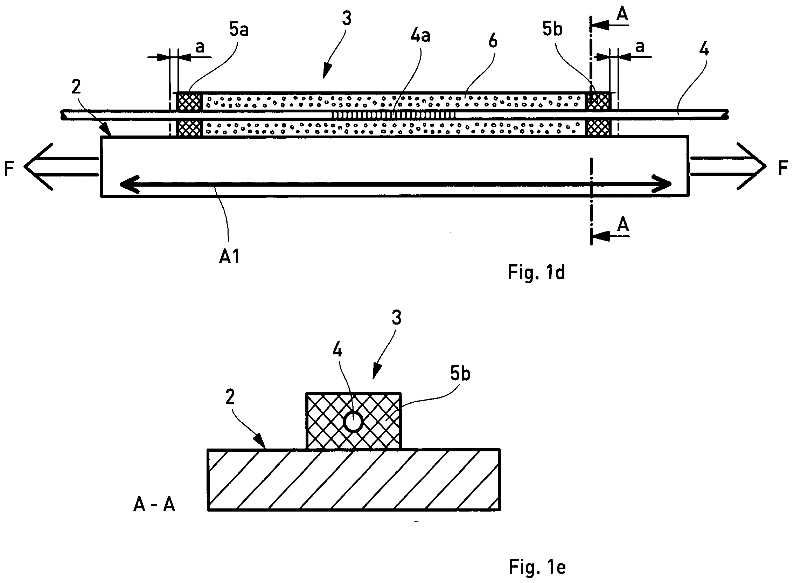

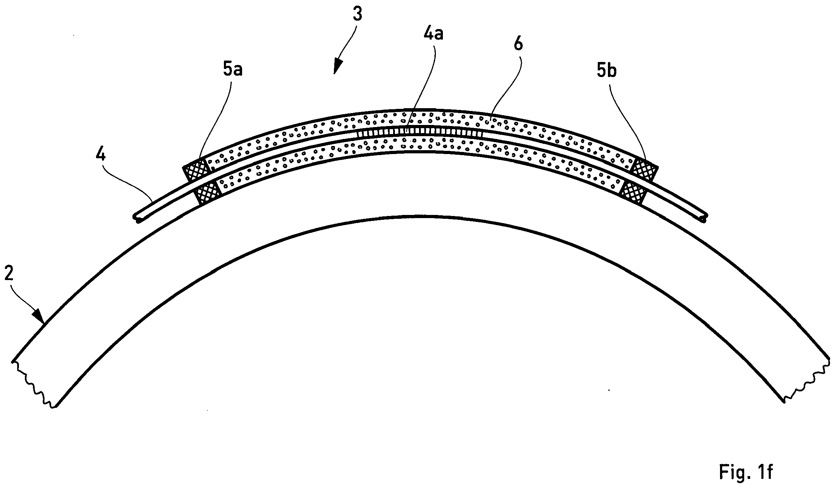

Bei einem FBG-Sensor mit einer Zweipunkt-Krafteinleitung liegt jedoch eine andere Art der Dehnungsübertragung vor, was nachfolgend erläutert wird. Die Fig. 1d und 1e zeigen im Längsschnitt und im Querschnitt einen auf einem Material befestigten FBG-Sensor gemäß dem Dokument WO 2008/101657 A1, der wie folgt aufgebaut ist: Eine Glasfaser mit einem FBG ist zwischen zwei starren Befestigungselementen gehalten und in einen weichen Kunststoff, z. B. einen Silikongummi, eingebettet. Die zwei starren Befestigungselemente sind auf der zu untersuchenden Materialoberfläche aufgeklebt. Der weiche Kunststoff dient vorzugsweise dazu, den mit dem FBG versehenen Abschnitt der Glasfaser vor Störkräften, d. h. seitlichen Kräften, zu schützen und die Handhabbarkeit des FBG-Sensors bei der Applikation insgesamt zu verbessern. Wird ein FBG-Sensor mit diesem Aufbau zur Dehnungsmessung an einer gekrümmten Oberfläche verwendet, treten jedoch Effekte auf, die zu größeren Messfehlern führen. Die Ursachen dafür werden nachfolgend an Hand der Fig. 1f - 1g erläutert.

Die Fig. 1f zeigt den auf einer gekrümmten Materialoberfläche applizierten Sensor gemäß dem Dokument WO 2008/101657 A1, und die Fig. 1g zeigt, auf welche Weise die Glasfaser einer Dehnung der Materialoberfläche folgt. Die Dehnung der Materialoberfläche ist durch den Doppelpfeil in dem zu überwachenden Material angedeutet. Durch das Dehnen der Materialoberfläche wird der Abstand zwischen den beiden Befestigungselementen um die Längen a + a vergrößert, d. h. die Faser wird um die Länge 2a gedehnt. Da die Faser nur in den zwei Befestigungselementen eingespannt ist, wird sie in Richtung Materialoberfläche gezogen, d. h. der Kunststoff drückt undefiniert auf das FBG. Außerdem wird durch diese Bewegung der Faser die tatsächliche Dehnung der Materialoberfläche verfälscht auf das FBG übertragen, so dass dadurch ein Messfehler auftritt, der von dem Krümmungsradius der Materialoberfläche abhängig ist.

Daher hat sich herausgestellt, dass sowohl mit einem Sensor gemäß dem Dokument JP 2003 279760 A als auch mit einem Sensor gemäß dem Dokument WO 2008/101657 A1 genaue Dehnungsmessungen auf gekrümmten Oberflächen nicht möglich sind.

Es ist die Aufgabe der Erfindung, einen FBG-Sensor mit einem Trägerkörper zu schaffen, der auch bei Messungen auf gekrümmten Oberflächen eine hohe Messgenauigkeit aufweist, gut handhabbar und kostengünstig herstellbar ist. Diese Aufgabe wird mit einem FBG-Sensor nach Anspruch 1 oder 2 gelöst. Nach Anspruch 1 ist ein FBG-Sensor mit einer optischen Faser, die ein FBG aufweist, zwischen zwei Befestigungselementen fixiert. Die Unterseiten der Befestigungselemente sind als Klebeflächen ausgebildet, die auf die zu untersuchende Werkstoffoberfläche geklebt werden. Weiterhin sind die optische Faser und die Befestigungselemente in einer Schutzmasse aus einem weichen Silikongummi oder einem Kunststoff mit vergleichbaren mechanischen Eigenschaften eingebettet. Die Faser ist zwischen einer oberen und einer unteren dünnen Gleitfolie aus Teflon oder aus einem Kunststoff mit vergleichbar geringem Reibungskoeffizienten wie Teflon eingebettet, wobei die Unterseite der unteren Gleitfolie in einer Ebene mit den Klebeflächen liegt.

Nach Anspruch 2 ist der FBG-Sensor mit einer optischen Faser, die ein FBG aufweist, zwischen zwei Befestigungselementen fixiert. Die Unterseiten der Befestigungselemente sind als Klebeflächen ausgebildet, die auf die zu untersuchende Werkstoffoberfläche geklebt werden. Weiterhin sind die optische Faser und die Befestigungselemente in einer Schutzmasse aus einem weichen Silikongummi oder einem Kunststoff mit vergleichbaren mechanischen Eigenschaften eingebettet. Die Faser ist mit einem dünnen Gleitschlauch aus Teflon oder aus einem Kunststoff mit vergleichbar geringem Reibungskoeffizienten wie Teflon umschlossen, wobei die äußere untere Mantellinie des Gleitschlauchs in einer Ebene mit den Klebeflächen liegt.

Ein FBG-Sensor mit dem Aufbau nach Anspruch 1 oder Anspruch 2 weist auch auf einer gekrümmten Oberfläche einen wesentlich geringeren Messfehler als eine Sensoranordnung gemäß JP 2003 279760 A oder WO 2008/101657 A1 auf. Das ist auf zwei Effekte zurückzuführen:
Wenn die Faser gedehnt wird, kann sie sich nicht in Richtung Werkstückoberfläche bewegen, da sie bereits an der tiefsten Linie nahe der Werkstückoberfläche aufliegt und lediglich durch die dünne Gleitfolie von dieser getrennt ist. Da diese Gleitschicht einen sehr geringen Reibungskoeffizienten aufweist, entstehen nahezu keine Stick-Slip-Effekte. Weiterhin entstehen auch keine Stick-Slip-Effekte durch Einflüsse der Schutzmasse, da diese nicht mit dem FBG in Berührung kommt, sondern durch die obere Gleitfolie von der Schutzmasse getrennt ist.

Bei der Weiterbildung der Erfindung gemäß Anspruch 1 sind nach Anspruch 3 die Gleitfolien an ihren Rändern verschweißt oder verklebt und die obere Gleitfolie ist mit der Schutzmasse verklebt.

Bei der Weiterbildung der Erfindung gemäß Anspruch 2 ist nach Anspruch 4 der Gleitschlauch mit der Schutzmasse verklebt.

Die Verschweißung oder Verklebung der Folien miteinander und die Verklebung der Folien und des Gleitschlauches mit der Schutzmasse verhindern, dass die Folien und der Gleitschlauch durch Mikrobewegungen wandern können. Durch solche Verschiebungen können innerhalb der Schutzmasse Verspannungen bewirkt werden, die die Messgenauigkeit des FBG verschlechtern. Solche Mikrobewegungen entstehen sowohl bei periodisch auftretenden mechanischen Kräften als auch bei Temperaturschwankungen.

Die Weiterbildung der Erfindung nach Anspruch 5 ermöglicht eine kaskadenartige Anordnung von mehreren nebeneinanderliegenden FBG in einem einzigen, sehr kompakten Bauelement, welches sich gut applizieren lässt. Mehrfachanordnungen werden in der Messtechnik häufig genutzt, um beim Ausfall eines FBG-Sensors auf einen weiteren funktionierenden Messkanal zurückgreifen zu können.

Die Erfindung wird nachfolgend anhand von Beispielen in Verbindung mit schematischen Zeichnungen näher erläutert.
- Fig. 1a: zeigt einen herkömmlichen Metallfolien-DMS auf einer gekrümmten Materialoberfläche.
- Fig. 1b: zeigt die Seitenansicht von Fig. 1a.
- Fig. 1c: zeigt einen vergrößerten Ausschnitt der Fig. 1 b.
- Fig. 1d - 1e: zeigen im Längs- und Querschnitt einen FBG-Sensor.
- Fig. 1f: zeigt den FBG-Sensor nach Fig. 1d auf einer gekrümmten Materialoberfläche.
- Fig. 1g: zeigt den FBG-Sensor nach Fig. 1f bei sich dehnender Materialoberfläche.
- Fig. 2a: zeigt den Längsschnitt eines FBG-Sensors gemäß der Erfindung.
- Fig. 2b: zeigt eine erste Ausführungsform des FBG-Sensors gemäß der Erfindung im Querschnitt.
- Fig. 2c: zeigt eine zweite Ausführungsform des FBG-Sensors gemäß der Erfindung im Querschnitt.
- Fig. 2d: zeigt eine dritte Ausführungsform des FBG-Sensors gemäß der Erfindung im Querschnitt.
- Fig. 2e: zeigt eine vierte Ausführungsform des FBG-Sensors gemäß der Erfindung im Querschnitt.

Die Fig. 1a zeigt in perspektivischer Ansicht einen herkömmlichen Metallfolien-DMS 1 auf einer gekrümmten Materialoberfläche 2, z. B. einem Rohr oder einem Druckkessel. Ein Metallfolien-DMS 1 besteht im Wesentlichen aus einer Kunststoff-Trägerfolie 1a, auf der wenigstens ein dünner mäanderförmiger Metallfolienstreifen 1b vollflächig befestigt ist. Zur Erfassung der Dehnung wird die Kunststoff-Trägerfolie 1a auf die Materialoberfläche 2 aufgeklebt.

Die Fig. 1b zeigt die Seitenansicht von Fig. 1a, und die Fig. 1c zeigt einen vergrößerten Ausschnitt der Fig. 1b. Wenn sich das Material dehnt, wie in Fig. 1c mit dem Dehnungspfeil A1 gezeigt, wird diese Dehnung gleichmäßig auf Grund der vollflächigen Verklebung auf die Trägerfolie 1a übertragen, und durch die vollflächige Verbindung der Metallfolie 1b mit der Trägerfolie 1a wird die Metallfolie 1b gedehnt. Insofern wird die Materialdehnung der Materialfläche 2 nahezu fehlerfrei auf den Metallfolienstreifen 1b übertragen, was mit dem gleich großen Dehnungspfeil A2 dargestellt ist. Diese nahezu fehlerfreie Dehnungsübertragung gilt für ebene Oberflächen ebenso wie für gekrümmte Oberflächen.

Im Gegensatz dazu wird die Dehnung bei einem FBG-Sensor nicht über die gesamte Applikationsfläche übertragen, was nachfolgend erläutert wird.

Die Fig. 1d und 1e zeigen im Längs- und Querschnitt einen FBG-Sensor 3 gemäß dem Dokument WO 2008/101657 A1, der wie folgt aufgebaut ist: Eine Glasfaser 4 mit einem FBG 4a ist zwischen zwei starren Befestigungselementen 5a, 5b gehalten und in einen weichen Kunststoff 6, z. B. einen Silikongummi, eingebettet. Die zwei starren Befestigungselemente 5a, 5b sind auf der zu untersuchenden Materialoberfläche 2 aufgeklebt und können aus miteinander verbundenen phenolharzgetränkten Glasfaserblättern bestehen. Der weiche Silikongummi 6 dient dazu, den Abschnitt der optischen Faser 4 mit dem FBG 4a vor Störkräften, d. h. z. B. seitlichen Kräften, zu schützen und die Handhabbarkeit des FBG-Sensors 3 bei der Applikation zu verbessern. Wenn an dem zu untersuchenden Material Kräfte F angreifen und sich das Material und somit die ebene Materialoberfläche 2 um die Längen a + a dehnen, wird diese Dehnung ebenfalls wie bei dem Metallfolien-Dehnungsmessstreifen nahezu fehlerfrei auf den FBG-Sensor 3 übertragen.

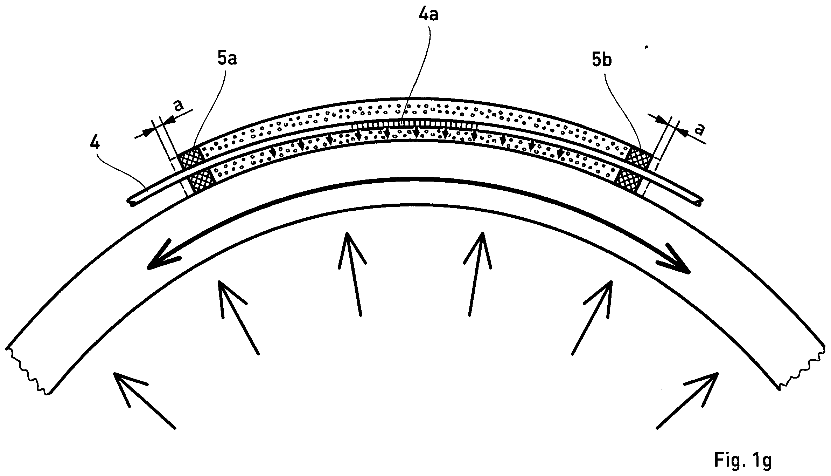

Wird jedoch ein FBG-Sensor 3 mit diesem Aufbau zur Dehnungsmessung an einer gekrümmten Oberfläche verwendet, treten Effekte auf, die zu größeren Messfehlern führen, was nachfolgend an Hand der Fig. 1f und 1g erläutert wird.

Die Fig. 1f zeigt den auf einer gekrümmten Materialoberfläche 2 applizierten FBG-Sensor 3. Da die optische Faser 4 sehr dünn und somit gut biegsam ist und der Silikongummi 6 sich ebenfalls gut an den Krümmungsradius der Materialoberfläche 2 anpasst, lassen sich FBG-Sensoren 3 mit diesem Aufbau prinzipiell auch gut auf stark gekrümmten Oberflächen applizieren.

Fig. 1g zeigt die Situation, wenn sich diese Materialoberfläche 2 dehnt, was mit den Pfeilen unterhalb der gekrümmten Materialwand symbolisiert wird.

Mit dem Doppelpfeil wird die Dehnung der Materialoberfläche dargestellt. Da die Faser 4 jedoch nur in den zwei Befestigungselementen 5a, 5b eingespannt ist, bewegt sie sich auf die Materialoberfläche zu und drückt sich in den Silikongummi. Diese Bewegung ist mit den kleinen Pfeilen symbolisiert. Die dabei auf das FBG 4a wirkenden Querkräfte verfälschen das Messergebnis. Außerdem wird durch diese Bewegung die tatsächliche Dehnung der Materialoberfläche nur unvollständig auf das FBG 4a übertragen, sodass dadurch ein weiterer Messfehler auftritt, der von dem Krümmungsradius der Materialoberfläche abhängig ist. Daher hat sich herausgestellt, dass weder mit einem Sensor gemäß JP 2003 279760 A, noch mit einem Sensor gemäß WO 2008/101657 A1 genaue Dehnungsmessungen auf gekrümmten Oberflächen möglich sind.

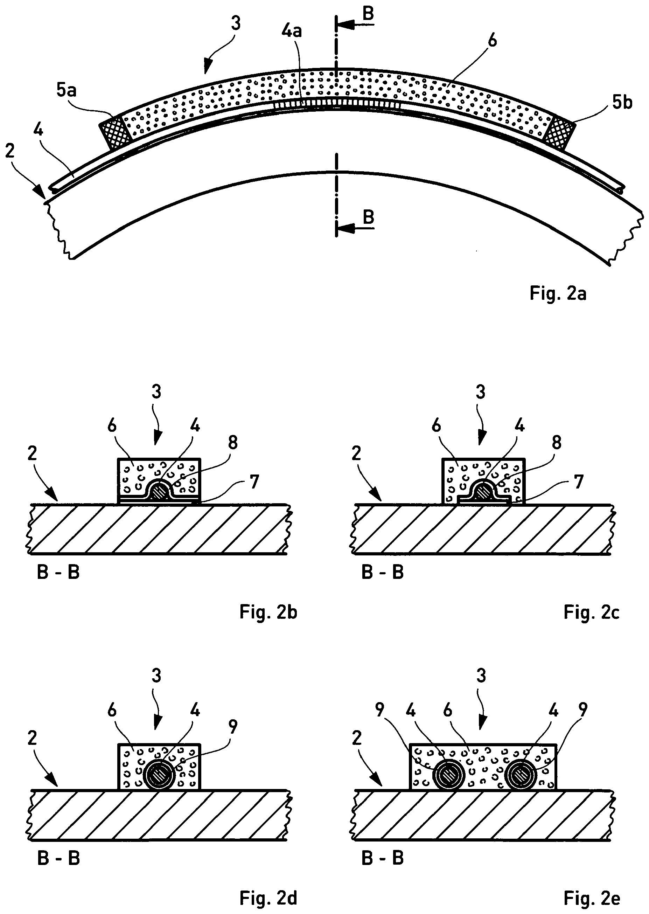

Diese beiden Ursachen für Messfehler werden jedoch mit dem erfindungsgemäßen FBG-Sensor nach den Fig. 2a bis 2e beseitigt.

Die Fig. 2a zeigt den Längsschnitt des erfindungsgemäßen FBG-Sensors 3. Der grundsätzliche Aufbau und die Funktion des FBG-Sensors 3 werden in Verbindung mit der Querschnittsdarstellung der Fig. 2b beschrieben.

Die optische Faser 4 ist zwischen den Befestigungselementen 5a, 5b verklebt, und jedes Befestigungselement ist mit seiner Unterseite mit der Materialoberfläche 2 verklebt. Weiterhin ist die optische Faser 4 zwischen zwei Gleitfolien 7 und 8 eingebettet. Diese zwei Folien bestehen z. B. aus Teflon, sind an ihren Rändern miteinander verschweißt und bilden für die Faser 4 ein Gleitlager. Die in diesem Fall 0,15 mm dünne Gleitfolie 7 liegt unmittelbar an der Materialoberfläche 2 auf, d. h. die Unterseite der Gleitfolie 7 liegt in der gleichen Ebene wie die Klebeflächen der Befestigungselemente 5a, 5b. Da sich die Gleitfolie 7 auf Grund ihrer Beschaffenheit und ihrer geringen Dicke nur vernachlässigbar zusammendrückt, wenn die Faser 4 gespannt wird, tritt der in Fig. 1g beschriebene Messfehler nicht auf bzw. ist vernachlässigbar gering. Da weiterhin die Faser 4 von oben mit einer Gleitfolie abgedeckt ist, treten auch keine Slip-Stick-Effekte durch den Einfluss des weichen Kunststoffs 6 auf.

Die gleiche Funktion weisen die Ausführungsformen nach Fig. 2c und 2d auf. Die Ausführungsform nach Fig. 2c zeigt, dass der weiche Kunststoff 6 über die Ränder der Gleitfolien 7, 8 ragt und somit eine sehr gute Abdichtung gegen Feuchtigkeit bewirkt, die durch Kapillarwirkung unter den Sensor eindringen könnte, was bei Frost zu Messfehlern führen würde. Bei der Ausführungsform nach Fig. 2d wird ein weichelastischer Schlauch 9 anstelle der Folien 7, 8 verwendet. Das ist eine bevorzugte Ausführungsform der Erfindung, da sie sich leicht und zuverlässig herstellen lässt.

Als Folien- und Schlauchmaterial kommen alle Kunststoffe infrage, die als weichelastisch beschrieben werden können und die eine sehr glatte Oberfläche aufweisen, wie z. B. Teflon oder Silikone.

Bei der Ausführungsform nach Fig. 2e sind zwischen den Befestigungselementen 5a, 5b zwei optische Fasern 4 eingeklebt und in den Kunststoff 6 eingebettet. Derartige Mehrfachsensoren werden verwendet, um z. B. die Ausfallwahrscheinlichkeit von Messketten zu verringern.

## Patentansprüche

1. FBG-Sensor mit einer optischen Faser (4), die ein FBG (4a) aufweist, wobei
- die optische Faser (4) zwischen zwei Befestigungselementen (5a, 5b) fixiert ist, deren Unterseiten als Klebeflächen ausgebildet sind, wobei die optische Faser (4) und die Befestigungselemente (5a, 5b) in
- einer Schutzmasse (6) aus einem weichen Silikongummi oder einem Kunststoff mit vergleichbaren mechanischen Eigenschaften eingebettet sind und
- die Faser (4) zwischen einer oberen und einer unteren dünnen Gleitfolie (7, 8) aus Teflon oder aus einem Kunststoff mit vergleichbar geringem Reibungskoeffizienten wie Teflon eingebettet ist, wobei
- die Unterseite der unteren Gleitfolie (7) in einer Ebene mit den Klebeflächen der Befestigungselemente (5a, 5b) liegt.

2. FBG-Sensor mit einer optischen Faser (4), die ein FBG (4a) aufweist, wobei
- die optische Faser (4) zwischen zwei Befestigungselementen (5a, 5b) fixiert ist, deren Unterseiten als Klebeflächen ausgebildet sind, wobei die optische Faser (4) und die Befestigungselemente (5a, 5b) in
- einer Schutzmasse (6) aus einem weichen Silikongummi oder einem Kunststoff mit vergleichbaren mechanischen Eigenschaften eingebettet sind und
- die Faser (4) mit einem dünnen Gleitschlauch (9) aus Teflon oder aus einem Kunststoff mit vergleichbar geringem Reibungskoeffizienten wie Teflon umschlossen ist, wobei
- die untere äußere Mantellinie des Gleitschlauchs (9) in einer Ebene mit den Klebeflächen der Befestigungselemente (5a, 5b) liegt.

3. FBG-Sensor nach Anspruch 1, wobei die Gleitfolien (7, 8) an ihren Rändern verschweißt oder verklebt sind und die obere Gleitfolie (8) mit der Schutzmasse (6) verklebt ist.

4. FBG-Sensor nach Anspruch 2, wobei der Gleitschlauch (9) mit der Schutzmasse (6) verklebt ist.

5. FBG-Sensor nach Anspruch 1 oder 2, wobei mehrere optische Fasern (4) zwischen den Befestigungselementen (5a, 5b) fixiert sind.

## Claims

1. An FBG sensor, comprising an optical fibre (4) having an FBG (4a), wherein
- the optical fibre (4) is fixed between two fixing elements (5a, 5b), the undersides of which are provided as adhesive surfaces, wherein the optical fibre (4) and the fixing elements (5a, 5b)
- are embedded in a protective compound (6) consisting of a soft silicone rubber or a plastic material having similar mechanical properties and
- the fibre (4) is embedded between an upper and a lower thin low-friction film (7, 8) made of Teflon or of a plastic material having a similarly low coefficient of friction to that of Teflon, wherein
- the underside of the lower low-friction film (7) lies in a plane with the adhesive surfaces of the fixing elements (5a, 5b).

2. An FBG sensor, comprising an optical fibre (4) having an FBG (4a), wherein
- the optical fibre (4) is fixed between two fixing elements (5a, 5b), the undersides of which are provided as adhesive surfaces, wherein the optical fibre (4) and the fixing elements (5a, 5b)
- are embedded in a protective compound (6) consisting of a soft silicone rubber or a plastic material having similar mechanical properties and
- the fibre (4) is surrounded by a thin low-friction tube (9) made of Teflon or a plastic material having a similarly low coefficient of friction to that of Teflon, wherein
- the lower external surface line of the low-friction tube (9) lies in a plane with the adhesive surfaces of the fixing elements (5a, 5b).

3. The FBG sensor according to claim 1, wherein the low-friction films (7, 8) are welded or glued at their edges and the upper low-friction film (8) is glued to the protective compound (6).

4. The FBG sensor according to claim 2, wherein the low-friction tube (9) is glued to the protective compound (6).

5. The FBG sensor according to claim 1 or 2, wherein a plurality of optical fibres (4) are fixed between the fixing elements (5a, 5b).

## Revendications

1. Capteur à réseau de Bragg sur fibre pourvu d'une fibre optique (4) comprenant un réseau de Bragg sur fibre (4a), dans lequel
- la fibre optique (4) est fixée entre deux éléments de fixation (5a, 5b) dont les faces inférieures sont réalisées sous la forme de surfaces adhésives, dans lequel la fibre optique (4) et les éléments de fixation (5a, 5b)
- sont noyés dans une masse de protection (6) en caoutchouc silicone souple ou en une matière plastique avec des propriétés mécaniques comparables, et
- la fibre (4) est noyée entre de minces films de glissement (7, 8) inférieur et supérieur en téflon ou en une matière plastique avec un faible coefficient de frottement comparable à celui du téflon, dans lequel
- le dessous du film de glissement inférieur (7) se situe dans un même plan que les surfaces adhésives des éléments de fixation (5a, 5b).

2. Capteur à réseau de Bragg sur fibre pourvu d'une fibre optique (4) comprenant un réseau de Bragg sur fibre (4a), dans lequel
- la fibre optique (4) est fixée entre deux éléments de fixation (5a, 5b) dont les faces inférieures sont réalisées sous la forme de surfaces adhésives, dans lequel la fibre optique (4) et les éléments de fixation (5a, 5b)
- sont noyés dans une masse de protection (6) en caoutchouc silicone souple ou en une matière plastique avec des propriétés mécaniques comparables, et
- la fibre (4) est entourée d'une mince gaine de glissement (9) en téflon ou en une matière plastique avec un faible coefficient de frottement comparable à celui du téflon, dans lequel
- la génératrice externe inférieure de la gaine de glissement (9) se situe dans un même plan que les surfaces adhésives des éléments de fixation (5a, 5b).

3. Capteur à réseau de Bragg sur fibre selon la revendication 1, dans lequel les films de glissement (7, 8) sont soudés ou collés à leurs bords et le film de glissement supérieur (8) est collé à la masse de protection (6).

4. Capteur à réseau de Bragg sur fibre selon la revendication 2, dans lequel la gaine de glissement (9) est collée à la masse de protection (6).

5. Capteur à réseau de Bragg sur fibre selon la revendication 1 ou 2, dans lequel plusieurs fibres optiques (4) sont fixées entre les éléments de fixation (5a, 5b).
